# EUROPÄISCHE PATENTSCHRIFT

(11) **EP 1 691 098 B1**
(45) Veröffentlichungstag und Bekanntmachung des Hinweises auf die Patenterteilung: **29.10.2008**
(21) Anmeldenummer: 05100997.5
(22) Anmeldetag: 11.02.2005
(51) Int. Cl.: F16D 3/28

(54) **Axiale Isolierung für ein kardanisches Kreuzgelenk**
Axial insulation for a crosspiece of a universal joint
Isolement axial pour un croissillon d'un joint universel

(43) Veröffentlichungstag der Anmeldung: 16.08.2006
(73) Patentinhaber: Ford Global Technologies, LLC, Dearborn, MI 48126 (US)
(72) Erfinder: Gross, Norbert, D- 40221, Düsseldorf (DE)
(74) Vertreter: Drömer, Hans-Carsten

(56) Entgegenhaltungen:
- EP-B- 0 563 940
- WO-A-01/51823
- US-A- 1 702 363
- US-A- 5 551 919

## Beschreibung

Die Erfindung betrifft ein Kardangelenk, das zwei Gelenkgabeln und ein Gelenkkreuz aufweist, wobei eine der Gelenkgabeln mit einer angetriebenen Welle bzw. Antriebswelle und die andere Gelenkgabel mit einer anzutreibenden Welle bzw. Abtriebswelle verbindbar bzw. verbunden ist, und wobei die beiden Gelenkgabeln um 90° radial verdreht zueinander angeordnet sind, so daß die beiden Gelenkgabeln einen Innenraum bilden, in dem das Gelenkkreuz angeordnet ist, und wobei das Gelenkkreuz aus zwei zueinander orthogonal angeordneten, separaten Zapfenträgern gebildet ist, die in den jeweils zugeordneten Gelenkgabeln drehbar gelagert sind, und über ein elastisches Kupplungselement miteinander verbunden sind.

Kardangelenke werden üblicherweise verwendet, wenn zwei drehmomentübertragende Wellen, deren fluchtende Ausrichtung nicht immer gewährleistet ist, miteinander verbunden werden sollen. Das Kardangelenk besteht dabei üblicherweise aus zwei einander gegenüberliegenden, um 90° gegeneinander versetzten Gelenkgabeln, die jeweils ein Ende der zwei gelenkig miteinander zu verbindenden Wellen darstellen. Zwischen den Gelenkgabeln ist das Gelenkkreuz angeordnet, das aus zwei um 90° gegeneinander versetzten Zapfenträgern besteht, wobei das Gelenkkreuz einstückig hergestellt ist, so daß die beiden Zapfenträger starr miteinander verbunden sind. Die Zapfenträger sind dabei jeweils in den beiden Gelenkgabeln um ihre Achse drehbar gelagert.

Bei der Übertragung von Antriebskräften, ist der Fachmann regelmäßig vor die Aufgabe gestellt, zwar die Drehbewegung zu übertragen, Schwingungen und Stöße aber bei der Übertragung möglichst zu eliminieren. Derartige Störungen können beispielsweise durch Schwingungen von der Antriebseinheit hervorgerufen werden. Dieses Problem macht sich besonders im Automobilbau, insbesondere im Bereich des Antriebsstrangs, beispielsweise im Bereich der Kardanwelle, wo die Schwingungen zwischen Antriebsaggregat und Hinterachse ungehindert übertragen werden, und im Bereich des Lenkungsstranges bzw. in der Lenksäule, wo bei Verwendung herkömmlicher Kardangelenke keinerlei Isolierung gegen durch Fahrbahnunebenheiten aufgezwungene niederfrequente Schwingungen bzw. Stöße erfotgt, bemerkbar. Derartige Störungen können einerseits zu Schädigungen im Antriebsstrang bzw. der Lenksäule und/oder zu akustischen oder mechanischen Beeinträchtigungen beim Fahrer führen.

Zum Zwecke akustischer oder schwingungsdynamischer Abkopplung, insbesondere in der Lenksäule ist es beispielsweise bekannt eine torsionselastische Kupplung mit einer so genannten Hardy-Scheibe, als axial elastisches Kupplungselement oder einer Schlingenscheibe zu verwenden. Die Hardy-Scheibe wird beispielsweise in der Lenksäule zwischen dem unteren Kardangelenk und einem Lenkgehäuse bzw. Lenkgetriebe oder zwischen den Kardangelenken angeordnet. Die in Drehrichtung steife Hardy-Scheibe ist derart ausgestaltet, daß diese in axialer Richtung der Lenksäule weich ist. Prinzipbedingt ist die Biegesteifigkeit der Hardyscheibe relativ gering. Dies bewirkt eine Verzerrung der Hardyscheibe mit den Biegemomenten aus dem Kardangelenk, falls die Hardyscheibe wie üblich in Serie mit dem Kardangelenk angeordnet ist. Da eine Hardyscheibe allein (ohne Kardangelenk) zumindest bei entsprechenden Standzeiten nicht geeignet ist, nicht fluchtende Wellen miteinander zu verbinden, wird nachteilig die Anzahl der Bauteile mit der notwendigen Serienanordnung mit dem Kardangelenk erhöht. Darüber hinaus ist der axiale Bauraum dadurch erhöht, und die übliche Kompensation der Ungleichförmigkeiten mit zwei gegenphasig angeordneten kardanischen Gelenken wird durch die zusätzliche Hardyscheibe gestört, da sie in Serie placiert wie ein zusätzliches Gelenk wirkt.

Die EP 0 563 940 B1 betrifft ein Kreuzgelenk mit zwei einander gegenüberliegenden, um 90° gegeneinander versetzten Gabeln, die jeweils Bestandteil je einer von zwei gelenkig miteinander zu verbindenden Wellen sind, oder die jeweils mit je einem von zwei gelenkig miteinander zu verbindenden Wellenenden verbindbar sind. Das Kreuzgelenk weist zwei um 90° gegeneinander versetzte, ein Zapfenkreuz bildende Zapfenpaare auf, die in den jeweiligen Gabelenden um ihre Achse drehbar und, bezogen auf die Drehachse der Wellen, drehmomentübertragend gelagert sind. Die beiden Zapfenpaare sind in der durch das Zapfenkreuz gebildeten Ebene zumindest geringfügig gegeneinander verschwenkbar, wobei jeder Zapfen in einem Ankerbock gelagert ist. Einander benachbarte Ankerböcke sind durch ein elastisches Kupplungselement miteinander verbunden. Das elastische Kupplungselement enthält ortsfest angeordnete, schlingenförmige Verstärkungseinlagen, die jeweils zwei benachbarte Ankerböcke miteinander verbinden. Die schlingenförmigen Verstärkungseinlagen liegen entlang dem Umfang des Kreuzgelenkes in einer Schlingenebene, die senkrecht zur Ebene des Zapfenkreuzes ist.

Als ein Hauptnachteil des in der EP 0 563 940 B1 offenbarten Kreuzgelenkes ist anzusehen, daß die beiden Zapfenpaare unterschiedlich die eigenen Zapfen schlüssig miteinander verbindet: Das eine Paar verwendet einen durchgängigen Bolzen, das andere Paar ist konfiguriert aus zwei kurzen Zapfen, die durch ein zusätzliches Verbindungsstück miteinander verbunden werden. Hierdurch wird zur Herstellung eines jeden Zapfens bzw. Zapfenpaares ein unterschiedliches Herstellungswerkzeug benötigt, wodurch die Herstellung des Kreuzgelenkes äußerst kostenintensiv ist. Das erforderliche Verbindungsstück beschränkt zudem die axiale und radiale Freigängigkeit des Gelenks. Außerdem ist der axiale Bauraumbedarf optimierbar.

Nachteilig ist weiterhin, daß das in der EP 0 563 940 B1 offenbarte Kreuzgelenk in seiner Konstruktion sehr aufwendig und damit sehr störanfällig ist. Als Nachteil ist weiter anzusehen, daß die Gabeln in der Weite klein und deren Gabellager somit größer (teurer) ausgeführt werden müssen, um bei sinnvollen Baugrößen ein hinreichendes Drehmoment zu übertragen. Wird bei dem Kreuzgelenk der EP 0 563 940 B1 der flexible Ring beschädigt, muß ein Ersatzring radial über die Anker zugeführt werden. Darüber hinaus ist das Kreuzgelenk gerade bei schnell drehenden Wellen schwierig auszuwuchten.

In der US 4,850,933 ist eine flexible Verbindung zur Verbindung einer angetriebenen Welle mit einer anzutreibenden Welle offenbart. Die Verbindung umfaßt:
eine flexible Zentralscheibe, die eine winklige Ausrichtung ermöglicht,
eine Mehrzahl tragender Blattfedem, die eine parallele Ausrichtung ermöglichen, wobei die Blattfedern jeweils erste und zweite Enden aufweisen,
eine Antriebsplatte und eine angetriebene Platte,
ein erstes paar L-förmige Haltenasen, die mit gegenüberliegenden Seiten der angetriebenen Platte und mit dem ersten Ende des ersten Paares der Blattfedern verbunden sind,
ein zweites paar L-förmige Haltenasen, die mit gegenüberliegenden Seiten der anzutreibenden Platte und mit dem ersten Ende des zweiten Paares der Blattfedern verbunden sind,
Mitteln, die mit dem ersten Paar L-förmige Haltenasen verbunden, aber getrennt davon sind, zur Verbindung der zweiten Enden des ersten Paares der Blattfedern mit gegenüberliegenden Enden der flexiblen Zentralscheibe,
Mitteln, die mit dem ersten Paar L-förmige Haltenasen verbunden, aber getrennt davon sind, zur Verbindung der zweiten Enden des zweiten Paares der Blattfedern mit gegenüberliegenden Enden der flexiblen Zentralscheibe,
eine erste Verbindungsnabe, die mit der angetriebenen Platte verbunden ist, um die angetriebene Platte mit der Antriebswelle zu verbinden,
eine zweite Verbindungsnabe, die mit der anzutreibenden Platte verbunden ist, um die anzutreibenden Platte mit der anzutreibenden Welle zu verbinden.

Die EP 0 160 599 beschreibt eine elastische Kupplungseinheit mit einem ersten und einem zweiten Gabelgelenk zur Befestigung an jeweils einem treibenden Element und einem getriebenen Element. Die Gabelgelenke weisen derart angeordnete Schenkel auf, daß die Schenkel des ersten Gabelgelenks und des zweiten Gabelgelenks ineinander geschachtelt sind. An jedem Gabelgelenk ist eine Zierblende befestigt, wobei die Flächen dieser zwei Zierblenden nahezu senkrecht zur Drehachse der Einheit angeordnet sind, daß ein Verbindungselement aus Elastomer an diesen Zierblendenflächen befestigt ist. Jede Zierblende ist an dem jeweiligen Gabelgelenk mittels eines in mindestens eine Öffnung der Zierblende und in den Schenkeln des Gabelgelenks ausgesparte Ausnehmungen eingeführten Bolzens befestigt.

Die GB 942,495 offenbart eine Verbindung für Wellen. Die Verbindung weist eine flexible Scheibe mit Kupplungselementen auf, die jeweils an einer Seite der Scheibe angeordnet sind. Jedem Kupplungselement ist eine zu verbindende Welle zugeordnet. Die Kupplungselemente sind in einem rechten Winkel um die Scheibe gedreht, und liegen normal zur Scheibenachse. Während des Betriebes der Verbindung, kann eine winklige Ausrichtung der verbundenen Wellen angepaßt werden, in dem die Kupplungselemente gedreht werden, ohne daß die Scheibe gebogen wird. Die Scheibe besteht ganz oder teilweise aus Plastik, Gummi oder ähnlichen elastischen Material, so daß dieses während der Verbindung biegefrei ist.

Als ein Hauptnachteil der in der GB 942,495 offenbarten Verbindung für Wellen ist anzusehen, daß die Kupplungselemente mit Spiel zur Scheibe und mit signifikanter Reibung gedreht werden, wobei das Verdrehspiel und die Reibung lediglich geringen Ansprüchen genügt.

Die EP 0563940 A offenbart ein Kardangelenk gemäß dem Oberbegriff des Anspruchs 1.

Der Erfindung liegt die Aufgabe zugrunde, ein Kardangelenk der eingangs genannten Art mit einfachen Mitteln dahingehend zu verbessern, daß dieses unter wirtschaftlichen Aspekten günstiger herstellbar ist, ohne daß das elastische Kupplungselement signifikante Biegemomente durchleiten muß.

Diese Aufgabe wird durch die Merkmale des Anspruchs 1 gelöst.

Das erfindungsgemäße Kardangelenk eignet sich insbesondere zum Einsatz in einer Lenksäule eines Kraftfahrzeuges, wobei gegenüber einem herkömmlichen Kardangelenk axiale Stöße herausfiltbar sind. Dieses Verhalten ist besonders wünschenswert in Lenksäulenkonstruktionen, da axiale Stöße z. B. durch Straßenanregungen so von einem Lenkrad abgehalten werden können, ohne daß Einbußen hinsichtlich einer Drehsteifigkeit in Kauf genommen werden müssen. Durch die Integration der Elastizität durch das zweifach drehbar gelagerte elastische Kupplungselement in das Kardangelenk wird vermieden, daß neben einer axialen Nachgiebigkeit auch eine Biegesteifigkeit bereitgestellt werden muß. Mittels des erfindungsgemäßen Kardangelenkes kann die axiale Nachgiebigkeit größer ausgeführt werden, so daß auch Isolationseigenschaften gegenüber herkömmlichen elastischen Kupplungen in Lenksäulenkonstruktionen verbessert sind. Das integrierte elastische Kupplungselement muß keine signifikanten Biegemomente durchleiten, da das elastische Kupplungselement in der Achse der Momente durch Lager biegefrei gehalten ist. Dies ermöglicht eine ideale Nachgiebigkeitseigenschaft in axialer Richtung ohne Biegewiderstände mit optimaler Steifigkeit in Rotationsrichtung. Die große axiale Nachgiebigkeit des Gelenkes kann den Wegfall eines sonst üblichen Verschiebegelenkes in der Lenksäule, welches Einbautoleranzen und Straßenanregungen kompensieren muß, begünstigen. Weiter kann das erfindungsgemäße Kardangelenk, wenn mit einer Scheibe ausgeführt, mit vergleichsweise großen Gabelweiten und vorteilhaft mit entsprechend klein bemessenen Gabellagem in einer sinnvollen Baugröße hergestellt werden, wobei wesentlich höhere Drehmomente übertragbar sind, als bei einem Kardangelenk mit kleinen Gabelweiten und größeren (teureren) Gabellagern. Weiter erlaubt die erfindungsgemäße Integration des Ringes ein einfaches Zuführen des flexiblen Ringes in axialer Richtung.

Weitere vorteilhafte Ausgestaltungen der Erfindung sind in den Unteransprüchen und in der folgenden Figurenbeschreibung offenbart. Es zeigen:
- Fig. 1: eine Seitenansicht eines Kardangelenks,
- Fig. 2: eine Darstellung entlang des Schnittes A-A aus Figur 1,
- Fig. 3: eine Seitenansicht eines Kardangelenks in einer zweiten Ausführung, und
- Fig. 4: eine Darstellung entlang des Schnittes A-A aus Figur 3.

In den unterschiedlichen Figuren sind gleiche Teile stets mit demselben Bezugszeichen versehen, so daß diese in der Regel auch nur einmal beschrieben werden.

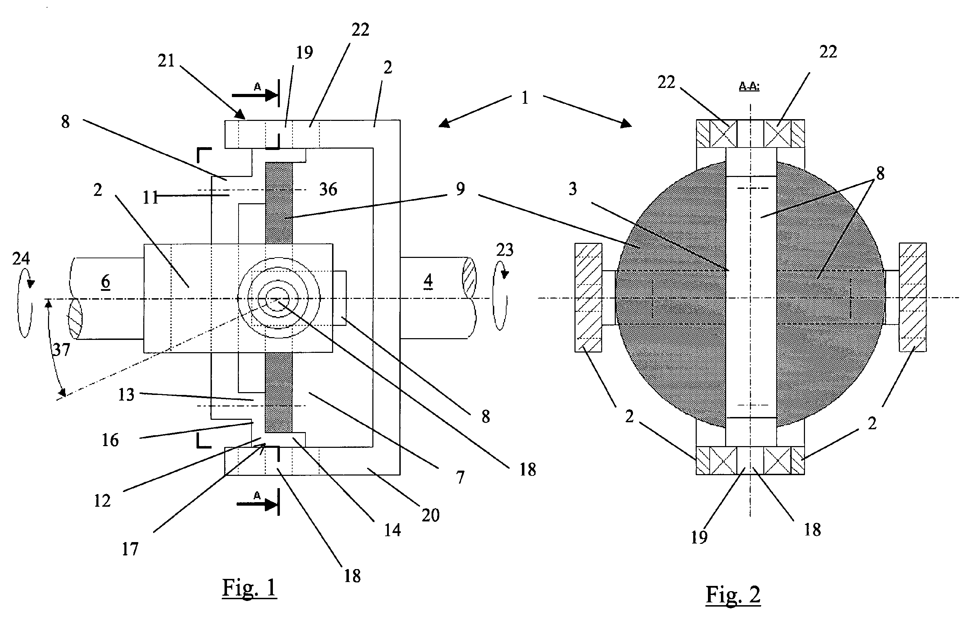

Die Figuren 1 und 2 zeigen ein Kardangelenk 1, das zwei Gelenkgabeln 2 und ein Gelenkkreuz 3 aufweist. Eine der Gelenkgabeln 2 ist mit einer angetriebenen Welle 4 bzw. Antriebswelle 4 verbunden, wobei die andere Gelenkgabel 2 mit einer anzutreibenden Welle 6 bzw. Abtriebswelle 6 verbunden ist. Die beiden Gelenkgabeln 2 sind um 90° zueinander radial verdreht angeordnet, so daß die beiden Gelenkgabeln 2 einen Innenraum 7 bilden. In dem Innenraum 7 ist das Gelenkkreuz 3 angeordnet. Das Gelenkkreuz 3 ist aus zwei zueinander orthogonal angeordneten, separaten Zapfenträgem 8 gebildet. Die Zapfenträger 8 sind in den jeweils zugeordneten Gelenkgabeln 2 drehbar gelagert und über ein elastisches Kupplungselement 9 miteinander verbunden.

Die beiden Zapfenträger 8 sind im Querschnitt gesehen identisch zueinander ausgestaltet.

Da beide Zapfenträger 8 identisch ausgestaltet sind, wird nachfolgend lediglich einer beschrieben. Der Zapfenträger 8 weist einen Basissteg 11 auf, an dem sich jeweils endseitig ein Z-förmiger Fortsatz 12 anschließt. Der Z-förmige Fortsatz 12 weist einen Verbindungsschenkel 13 sowie einen Anlageschenkel 14 auf. Mit dem Verbindungsschenkel 13 ist der Z-förmige Fortsatz 12 mit dem Basissteg 11 verbunden, wobei zur Verbindung des Verbindungsschenkels 13 mit dem Anlageschenkel 14 ein Basisschenkel 16 vorgesehen ist. Der Basisschenkel 16 ist in dem dargestellten Ausführungsbeispiel parallel zum Basissteg 11 orientiert, so daß der Zapfenträger 8 im Querschnitt gesehen quasi als Doppel-U-förmiger Rotationskörper ausgestaltet ist.

Die Anlageschenkel 14 sind zu einer Innenseite 17 der zugeordneten Gelenkgabel 2 angeordnet, wobei jeweils ein Zapfen 18 des Zapfenträgers 8 eine Lagerbohrung 19 in der zugeordneten Gelenkgabel 2 durchgreift. Die Lagerbohrung 19 ist in Gabeischenkeln 20 der jeweiligen Gelenkgabel 2 eingebracht.

Der Zapfen 18 schließt bündig mit einer zur Innenseite 17 gegenüberliegenden Außenseite 21 der zugeordneten Gelenkgabel 2 ab.

Der Zapfen 18 ist jeweils in einem Lager 22 in der zugeordneten Gelenkgabel 2, bzw. der Lagerbohrung 19 drehbar gelagert, wobei der Anlageschenkel 14 an dem Lager 22 bzw. der zur Innenseite 17 orientierten Seite des Lagers 22 anliegt. Das Lager 22 kann als Nadellager, Kugellager oder anderen Wälzlagertyp oder als Gleitlager ausgestaltet sein. Die Lagerelemente 22 werden geeignet radial zur Gelenkachse in den Gabeln 2 bzw. deren Gabelschenkeln fixiert. Mögliche Ausführungsformen sind zum Beispiel Preßpassung, Klebung oder Formschluß (Schulteranlage, Springring oder dergleichen) der Lageraußenringe in den zugeordneten Gabelschenkeln oder beispielsweise durch Formschluß der Lager z. B. mittels einseitigem und/oder zweiseitigem Schulterschluß an dem Zapfenträger. Vorzugsweise ist zumindest ein Lager pro Gelenkgabel in der Lage, zusätzlich zu den radialen Lagerkräften noch axiale Lagerkräfte aufzunehmen.

Die Zapfenträger 8 sind räumlich innerhalb des Innenraumes 7 voneinander getrennt. Zur Verbindung der beiden Zapfenträger 8 ist das elastische Kupplungselement 9 vorgesehen, das jeweils mit dem Basisschenkel 16 des Z-fömigen Fortsatzes 12 verbunden ist. Als Verbindung des elastischen Kupplungselementes 9 mit dem Basisschenkel 16 kann beispielsweise eine Verschraubung, Vemietung und/oder Vulkanisierung oder dergleichen vorgesehen sein.

Das elastische Kupplungselement 9 ist in dem dargestellten Ausführungsbeispiel gemäß Figur 1 als torsionssteife, biegeelastische bzw. axial elastische Scheibe, vorzugsweise als torsionssteife, biegeelastische Hardy-Scheibe ausgestaltet. Denkbar ist allerdings auch, daß das elastische Kupplungselement als torsionssteifer, biegeelastischer bzw. axial elastischer Ring ausgestaltet sein kann. Als Material für das elastische Kupplungselement 9 kann beispielsweise Gummi oder dergleichen vorgesehen werden.

In dem Kardangelenk 1 wird ein Eingangsmoment (Drehrichtung 23) über die angetriebene Welle 4 (Antriebswelle) auf den zugeordneten Zapfenträger 8 und von dort auf das elastische Kupplungselement 9 als Zug-/Druckspannung an den kreuzenden Zapfenträger 8 und dann weiter auf die Gelenkgabel 2 der anzutreibenden Welle 6 bzw. Abtriebswelle übertragen. Dies ist mittels des zum Eingangsmoment (Drehrichtung 23) gleichsinnigen Ausgangsmoments (Drehrichtung 24) dargestellt. Das elastische Kupplungselement 9 ist hinsichtlich der geringfügig erforderlichen Biegesteifigkeit derart gewählt, daß sichergestellt wird, daß eine Drehung des Zapfens 18 bei Neigung (Inklination 37) und Rotation der Gelenkgabel 2 stattfinden kann, um das Reibungsmoment gemäß der gewählten Lagerluft in den Lagern 22 zu überwinden. In axialer Richtung erlaubt das elastische Kupplungselement so eine Nachgiebigkeit, die zur Isolation genutzt werden kann, während die Kontur des elastischen Kupplungselementes 9 eine hohe Drehsteifigkeit bereitstellt.

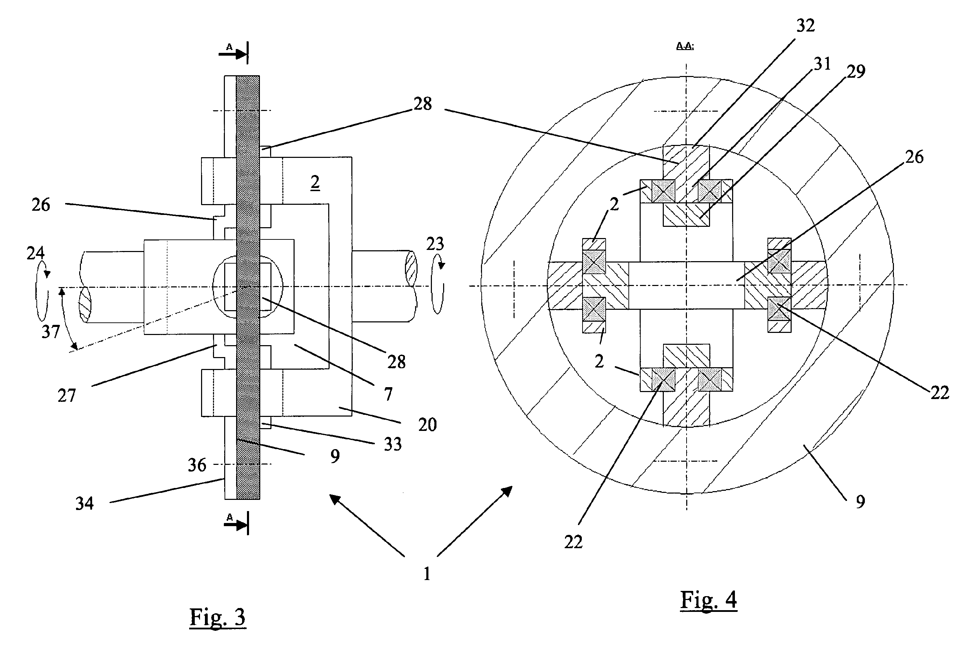

Ein weiteres Ausführungsbeispiel des erfindungsgemäßen Kardangelenkes 1 zeigen die Figuren 3 und 4.

Im Unterschied zu dem in den Figuren 1 und 2 dargestellten Ausführungsbeispiel ist das elastische Kupplungselement 9 als Ring, bzw. Kreisring nicht in dem Innenraum 7, sondem außen um die jeweiligen Gelenkgabeln 2 herum angeordnet, weswegen auch Zapfenträger 26 im Vergleich zu dem zu den Figuren 1 und 2 beschriebenen Zapfenträgem 8 unterschiedlich ausgestaltet sind. Das elastische Kupplungselement 9 ist als torsionssteifer, biege-elastischer bzw. axial elastischer Ring, bzw. Kreisring runder, vieleckiger oder polygonaler Ausgestaltung ausgeführt.

Die Zapfenträger 26 gemäß dem Ausführungsbeispiel der Figuren 3 und 4 sind aber wiederum identisch ausgestaltet, weswegen nachfolgend lediglich einer beschrieben wird.

Der Zapfenträger 26 weist einen Basissteg 27 auf, an dem ein Fortsatz 28 angeordnet ist.

Der Fortsatz 28 weist drei ineinander übergehende Bereiche 29, 31 und 32 auf. Der erste Bereich 29 ist im Innenraum 7 angeordnet und im Querschnitt gesehen im Wesentlichen rechteckig ausgestaltet. Mit dem ersten Bereich 29 ist der Fortsatz mit dem Basissteg 27 verbunden. Der zweite Bereich 31 schließt sich an den ersten Bereich 29 an und durchgreift die Lagerbohrung 19 des in der zugeordneten Gelenkgabel 2 angeordneten Lagers 22. Bezogen auf den ersten Bereich 29 ist der zweite Bereich 31 im Querschnitt gesehen dünner ausgestaltet, so daß der Zapfenträger 26 mit seinem zweiten Bereich 31 radial an den Lagern 22 anliegt. Der zweite Bereich 31 schließt bevorzugt bündig mit der Außenseite 21 der zugeordneten Gelenkgabel 2 ab, kann aber auch etwas überstehen. Der zweite Bereich 31 ist in Figur 3 nicht erkennbar. An den zweiten Bereich 31 schließt sich der dritte Bereich 32 an, der im Querschnitt gesehen im Wesentlichen L-förmig mit einem Quersteg 33 und einem radial nach außen gerichteten, senkrecht zu dem Quersteg 33 angeordneten Basissteg 34 ausgestaltet ist.

Bei der Ausgestaltung gemäß den Figuren 3 und 4 ist das elastische Kupplungselement 9 über den Basissteg 34 des dritten Bereiches 32 mit den Zapfenträgem 26 verbunden. Als Verbindung kann bevorzugt eine Verschraubung, Vernietung, Vulkanisierung oder dergleichen vorgesehen sein.

Die Verbindung des jeweiligen elastischen Kupplungselementes 9 mit den jeweiligen Zapfenträgem 8 bzw. 26 ist in den Figuren 1 bzw. 3 mittels der strichpunktierten Achse 36 angedeutet.

Die direkte Führung der Zapfenträger 8 bzw. 26 von einem Lager zu dem anderen Lager 22 innerhalb der jeweils zugeordneten Gelenkgabel 2 erfordert eine Ausgestaltung der Zapfenträger 8 bzw. 26 derart, daß an ihrem Kreuzungspunkt eine Freigängigkeit vorgesehen ist, um eine generelle axiale Verbindungsnachgiebigkeit zu erlauben.

In den Ausführungsbeispielen nach den Figuren 1 bis 4 können die Zapfenträger 8 prinzipiell auch um 180° in den Lagern 22 gedreht gegen das elastische Kupplungselement 9 befestigt betrieben werden, was zusätzliche Einstellungsoptionen bei dem elastischen Kupplungselement 9 mit unterschiedlicher axialer Steifigkeit bei Zug- und Druckbelastung ermöglicht. In der dargestellten Position ergeben sich aufgrund der verketteten Anordnung der jeweiligen Gelenkgabel 2 mit dem zugeordneten Zapfenträger 8 Vorteile hinsichtlich eines Fail-Safe-Verhaltens, da bei Ausfall des elastischen Kupplungselementes 9 die räumliche Zuordnung der Zapfenträger 8 zur zugeordneten Gelenkgabel 2 erhalten bleibt.

Das in den Figuren 1 bis 4 jeweils dargestellte Kardangelenk 1 eignet sich insbesondere zum Einsatz in einer Lenksäule eines Kraftfahrzeuges. Die Wellen 4 bzw. 6 sind zueinander gefluchtet ausgerichtet dargestellt. Im Fahrzeug liegt üblicherweise eine zueinander abgewinkelte Position vor, wobei das Kardangelenk die Drehübertragung aufrechterhält. Die abgewinkelte Position ist in den Figuren 1 und 3 mittels des Inklinationswinkels 37 dargestellt.

## Patentansprüche

1. Kardangelenk, das zwei Gelenkgabeln (2) und ein Gelenkkreuz (3) aufweist, wobei eine der Gelenkgabeln (2) mit einer angetriebenen Welle (4) bzw. Antriebswelle und die andere Gelenkgabel (2) mit einer anzutreibenden Welle (6) bzw. Abtriebswelle verbindbar bzw. verbunden ist, und wobei die beiden Gelenkgabeln (2) um 90° zueinander radial verdreht angeordnet sind, so daß die beiden Gelenkgabeln (2) einen Innenraum bilden, in dem das Gelenkkreuz (3) angeordnet ist, und wobei das Gelenkkreuz (3) aus zwei zueinander orthogonal angeordneten, separaten Zapfenträgern (8; 26) gebildet ist, die in den jeweils zugeordneten Gelenkgabeln (2) drehbar gelagert sind, und über ein elastisches Kupplungselement (9) miteinander verbunden sind,
**dadurch gekennzeichnet, daß**
die Zapfenträger (8; 26) jeweils einen Basissteg (11; 27) aufweisen, an denen jeweils ein Fortsatz (12; 28) angeordnet ist, mit denen das elastische Kupplungselement (9) verbunden ist, wobei die Zapfenträger (8; 26) identisch ausgestaltet sind.

2. Kardangelenk nach Anspruch 1,
**dadurch gekennzeichnet, daß**
der jeweilige Zapfenträger (8) mit seinem Zapfen (18) in die zugeordnete Gelenkgabel (2) eingreift und bündig mit einer zum Innenraum (7) gegenüberliegenden Außenseite (21) der jeweiligen Gelenkgabel (2) abschließt.

3. Gelenkgabel nach Anspruch 1 oder 2,
**dadurch gekennzeichnet, daß**
das elastische Kupplungselement (9) in dem Innenraum (7) angeordnet ist.

4. Kardangelenk nach einem der vorhergehenden Ansprüche,
**dadurch gekennzeichnet, daß**
das elastische Kupplungselement (9) als torsionssteife, biegeelastische Scheibe ausgestaltet ist.

5. Kardangelenk nach einem der Ansprüche 1 bis 4,
**dadurch gekennzeichnet, daß**
das elastische Kupplungselement (9) als torsionssteifer, biegeelastischer Ring ausgestaltet ist.

6. Kardangelenk nach Anspruch 1,
**dadurch gekennzeichnet, daß**
der jeweilige Zapfenträger (26) die jeweils zugeordnete Gelenkgabel (2) durchgreift und mit seinem Fortsatz (28) über eine zum Innenraum (7) gegenüberliegende Außenseite (21) der jeweiligen Gelenkgabel (2) übersteht.

7. Kardangelenk nach Anspruch 6,
**dadurch gekennzeichnet, daß**
der Fortsatz (28) mit seinem überstehenden Bereich (32) im Querschnitt gesehen L-förmig mit einem Quersteg (33) und einem radial nach außen gerichteten, senkrecht zu dem Quersteg (33) angeordneten Basissteg (34) ausgestaltet ist.

8. Kardangelenk nach Anspruch 6 oder 7,
**dadurch gekennzeichnet, daß**
das elastische Kupplungselement (9) als torsionssteifer, biegeelastischer Ring ausgestaltet ist.

9. Kardangelenk nach einem der Ansprüche 6 bis 8,
**dadurch gekennzeichnet, daß**
das elastische Kupplungselement (9) um die Gelenkgabeln (2) herumgeführt ist.

10. Kardangelenk nach einem der vorhergehenden Ansprüche,
**dadurch gekennzeichnet, daß**
das elastische Kupplungselement (9) mit dem Zapfenträger (8, 26) beispielsweise mittels einer Verschraubung, Vernietung, Vulkanisierung oder dergleichen verbindbar ist.

## Claims

1. Cardanic joint which has two joint forks (2) and a universal joint (3), wherein one of the joint forks (2) is or can be connected to a driven shaft (4) or drive shaft and the other joint fork (2) is or can be connected to a shaft (6) which is to be driven or output shaft, the two joint forks (2) being arranged such that they are rotated radially by 90° with respect to one another, with the result that the two joint forks (2) form an inner space, in which the universal joint (3) is arranged, and the universal joint (3) being formed from two separate journal carriers (8; 26) which are arranged orthogonally with respect to one another, are mounted rotatably in the respectively associated joint forks (2) and are connected to one another via an elastic coupling element (9), **characterized in that** the journal carriers (8; 26) have in each case one base web (11; 27), on which in each case one projection (12; 28) is arranged, to which the elastic coupling element (9) is connected, the journal carriers (8; 26) being configured identically.

2. Cardanic joint according to Claim 1, **characterized in that** the respective journal carrier (8) engages with its journal (18) into the associated joint fork (2) and terminates flushly with an outer side (21) of the respective joint fork (2), which outer side (21) lies opposite the inner space (7).

3. Joint fork according to Claim 1 or 2, **characterized in that** the elastic coupling element (9) is arranged in the inner space (7).

4. Cardanic joint according to one of the preceding claims, **characterized in that** the elastic coupling element (9) is configured as a torsionally rigid, flexurally elastic disc.

5. Cardanic joint according to one of Claims 1 to 4, **characterized in that** the elastic coupling element (9) is configured as a torsionally rigid, flexurally elastic ring.

6. Cardanic joint according to Claim 1, **characterized in that** the respective journal carrier (26) reaches through the respectively assigned joint fork (2) and protrudes with its projection (28) beyond an outer side (21) of the respective joint fork (2), which outer side (21) lies opposite the inner space (7).

7. Cardanic joint according to Claim 6, **characterized in that** the projection (28) with its protruding region (32) is configured, in an L-shaped manner as viewed in cross section, with a transverse web (33) and a radially outwardly oriented base web (34) which is arranged perpendicularly with respect to the transverse web (33).

8. Cardanic joint according to Claim 6 or 7, **characterized in that** the elastic coupling element (9) is configured as a torsionally rigid, flexurally elastic ring.

9. Cardanic joint according to one of Claims 6 to 8, **characterized in that** the elastic coupling element (9) is guided around the joint forks (2).

10. Cardanic joint according to one of the preceding claims, **characterized in that** the elastic coupling element (9) can be connected to the journal carrier (8, 26), for example by means of a screwed connection, riveted connection, vulcanized connection or the like.

## Revendications

1. Joint à croisillon, présentant deux fourchettes de joint (2) et un croisillon articulé (3), l'une des fourchettes de joint (2) pouvant être connectée ou étant connectée à un arbre entraîné (4) ou un arbre d'entraînement et l'autre fourchette de joint (2) pouvant être connectée ou étant connectée à un arbre à entraîner (6) ou un arbre de sortie, et les deux fourchettes de joint (2) étant disposées de manière tournée radialement de 90° l'une par rapport à l'autre, de sorte que les deux fourchettes de joint (2) forment un espace interne, dans lequel est disposé le croisillon articulé (3), et le croisillon articulé (3) étant constitué de deux supports de tourillon séparés (8 ; 26) perpendiculaires l'un à l'autre, qui sont montés à rotation dans les fourchettes de joint (2) respectivement associées, et qui sont connectés l'un à l'autre par le biais d'un élément d'accouplement élastique (9),
**caractérisé en ce que**
les supports de tourillon (8 ; 26) présentent chacun une partie de base (11 ; 27), sur laquelle est disposée à chaque fois une saillie (12 ; 28), à laquelle l'élément d'accouplement élastique (9) est connecté, les supports de tourillon (8 ; 26) étant de configuration identique.

2. Joint à croisillon selon la revendication 1,
**caractérisé en ce que**
le support de tourillon respectif (8) vient en prise avec son tourillon (18) dans la fourchette de joint (2) associée et se termine en affleurement avec un côté extérieur (21) opposé à l'espace interne (7) de la fourchette de joint (2) respective.

3. Joint à croisillon selon la revendication 1 ou 2,
**caractérisé en ce que**
l'élément d'accouplement élastique (9) est disposé dans l'espace interne (7).

4. Joint à croisillon selon l'une quelconque des revendications précédentes,
**caractérisé en ce que**
l'élément d'accouplement élastique (9) est réalisé sous forme de disque rigide en torsion, flexible élastique.

5. Joint à croisillon selon l'une quelconque des revendications 1 à 4,
**caractérisé en ce que**
l'élément d'accouplement élastique (9) est réalisé sous forme de bague rigide en torsion, flexible élastique.

6. Joint à croisillon selon la revendication 1,
**caractérisé en ce que**
le support de tourillon respectif (26) traverse la fourchette de joint (2) respectivement associée et dépasse avec sa saillie (28) au-delà d'un côté extérieur (21), opposé à l'espace interne (7), de la fourchette de joint respective (2).

7. Joint à croisillon selon la revendication 6,
**caractérisé en ce que**
la saillie (28) est configurée avec sa région qui dépasse (32) en forme de L en section transversale, avec une partie transversale (33) et une partie de base (34) orientée radialement vers l'extérieur, disposée perpendiculairement à la partie transversale (33).

8. Joint à croisillon selon la revendication 6 ou 7,
**caractérisé en ce que**
l'élément d'accouplement élastique (9) est réalisé sous forme de bague rigide en torsion, flexible élastique.

9. Joint à croisillon selon l'une quelconque des revendications 6 à 8,
**caractérisé en ce que**
l'élément d'accouplement élastique (9) est guidé autour des fourchettes de joint (2).

10. Joint à croisillon selon l'une quelconque des revendications précédentes,
**caractérisé en ce que**
l'élément d'accouplement élastique (9) peut être connecté au support de tourillon (8, 26) par exemple par vissage, rivetage, vulcanisation ou similaire.
